# EUROPEAN PATENT APPLICATION

(11) **EP 1 924 088 A2**
(43) Date of publication of application: **21.05.2008**
(21) Application number: 07022310.2
(22) Date of filing: 16.11.2007
(51) Int. Cl.: H04N 5/445, H04N 7/24

(54) **Broadcast receiver capable of displaying broadcast-related information using data service and method of controlling the broadcast receiver**

(30) Priority: 17.11.2006 KR 20060113827
(71) Applicant: LG Electronics Inc., Yongdungpo-gu Seoul 150-010 (KR)
(72) Inventor: Kwak, Jae Do, Seoul 137-724 (KR); Kim, Mi sun, Seoul 153-023 (KR)
(74) Representative: Katérle, Axel

(57) **Abstract**

A broadcast receiver which can scale up broadcast-related information displayed on a screen using a data service and a method of controlling the broadcast receiver are provided. The broadcast receiver receives a broadcast signal, extracts broadcast program data from the broadcast signal, and displays the broadcast program data on a screen. Also, the broadcast receiver extracts broadcast-related information from the broadcast signal and stores the broadcast-related information. When a broadcast-related information scale-up mode is selected, the broadcast receiver withdraws the broadcast-related information and displays the broadcast-related information on the screen. In this manner, it is possible to display broadcast-related information on a screen so that a user can easily recognize the broadcast-related information from the screen.

## Description

This application claims the benefit of Korean Application No. 2006-113827, filed on November 17, 2006 in the Korean Intellectual Property Office, the disclosure of which is incorporated herein by reference.

### BACKGROUND OF THE INVENTION

### 1. Field of the Invention

The present invention relates to a broadcast receiver which can scale up broadcast-related information displayed on a screen using a data service such as Binary Format for Scene (BIFS) while receiving a broadcast program, and a method of controlling the broadcast receiver.

### 2. Description of the Related Art

Digital multimedia broadcasting (DMB) includes digital video and audio broadcasting technology that enables a user to watch a broadcast program while moving from place to place and broadcast services that are provided using the digital video and audio broadcasting technology. DMB is classified into terrestrial-DMB (T-DMB) and satellite-DMB (S-DMB) according to the type of radio transmission/reception. In recent years, research has been vigorously conducted on ways to provide bilateral DMB data services.

Examples of broadcast receivers capable of receiving multimedia broadcast data and executing the multimedia broadcast data include DMB phones integrated with mobile phones, personal portable devices with no communication function, and set-top boxes for vehicles.

In general, broadcast receivers which receive digital multimedia broadcast programs are equipped with small-sized display windows in order to provide mobility and portability. Therefore, users may not be able to easily recognize broadcast-related information such as text information displayed in a certain area on a small screen. For example, when a user watches a sports game with his/her broadcast receiver, broadcast-related information such as game scores, running time, and other information is displayed in a certain area on the screen of the broadcast receiver. Likewise, when a user watches a home shopping program with his/her broadcast receiver, broadcast-related information such as product information is displayed in a certain area on the screen of the broadcast receiver. However, if the screen of a broadcast receiver is small, a user may not be able to easily recognize such broadcast-related information from the screen of the broadcast receiver.

Therefore, since there is a clear limitation in displaying information using a broadcast receiver equipped with a small-sized screen, it is necessary to allow a user to easily recognize broadcast-related information even from a small-sized screen of a broadcast receiver while watching a broadcast program.

### SUMMARY OF THE INVENTION

The present invention provides a broadcast receiver which can scale up, upon the request of a user, broadcast-related information that is displayed in a certain area on a screen so that the user can easily recognize the broadcast-related information, and a method of controlling the broadcast receiver.

According to an aspect of the present invention, there is provided a method of controlling a broadcast receiver, the method including receiving a broadcast signal; extracting broadcast program data from the broadcast signal and displaying the broadcast program data on a screen; extracting broadcast-related information from the broadcast signal and storing the broadcast-related information; and withdrawing the broadcast-related information and then displaying the broadcast-related information on the screen when a broadcast-related information scale-up mode is selected.

According to another aspect of the present invention, there is provided a method of controlling a broadcast receiver, the method including generating broadcast-related information which can be selectively displayed by a broadcast receiver; generating a TS by encoding the broadcast-related information and combining the encoded broadcast-related information with broadcast program data; and modulating the TS and transmitting the modulated TS to the broadcast receiver.

According to another aspect of the present invention, there is provided a system for controlling a broadcast receiver, the system including a broadcast receiver which receives a broadcast signal, extracts broadcast-related information from the broadcast signal, displays the broadcast-related information on a screen, and extracts broadcast-related information from the broadcast signal and then displays the broadcast-related information when a broadcast-related information scale-up mode is selected; and a broadcast signal transmitter which generates a TS by encoding the broadcast-related information and combining the encoded broadcast-related information with the broadcast program data, generates the broadcast signal by modulating the TS, and transmits the TS to the broadcast receiver.

According to another aspect of the present invention, there is provided a broadcast receiver, including a broadcast receiver which receives a broadcast signal and extracts broadcast program data and broadcast-related information from the broadcast signal; a display unit which displays the broadcast program data on a screen; and a controller which controls the broadcast-related information to be displayed on the screen when a broadcast-related information scale-up mode is selected.

### BRIEF DESCRIPTION OF THE DRAWINGS

The above and other features and advantages of the present invention will become more apparent by describing in detail preferred embodiments thereof with reference to the attached drawings in which:
FIG. 1 is a block diagram of a broadcast receiver according to an embodiment of the present invention;
FIG. 2 is a detailed block diagram of a broadcast reception unit of FIG. 1;
FIGS. 3 and 4 are flowcharts illustrating the transmission/reception of broadcast-related information, according to an embodiment of the present invention;
FIG. 5 explains the display of broadcast-related information on a screen by a broadcast receiver, according to an embodiment of the present invention;
FIG. 6 is a flowchart illustrating a method of controlling a broadcast receiver according to an embodiment of the present invention; and
FIG. 7 illustrates screen images displayed by a display unit and explains the method illustrated in FIG. 6.

### DETAILED DESCRIPTION OF THE INVENTION

The present invention will hereinafter be described in detail with reference to the accompanying drawings in which exemplary embodiments of the invention are shown.

A method of controlling a broadcast receiver according to an embodiment of the present invention can be applied to a digital multimedia broadcasting (DMB) environment using Binary Format for Scene (BIFS), but the present invention is not restricted to this. In other words, the present invention may be applied to various broadcast environments, other than a DMB environment using BIFS.

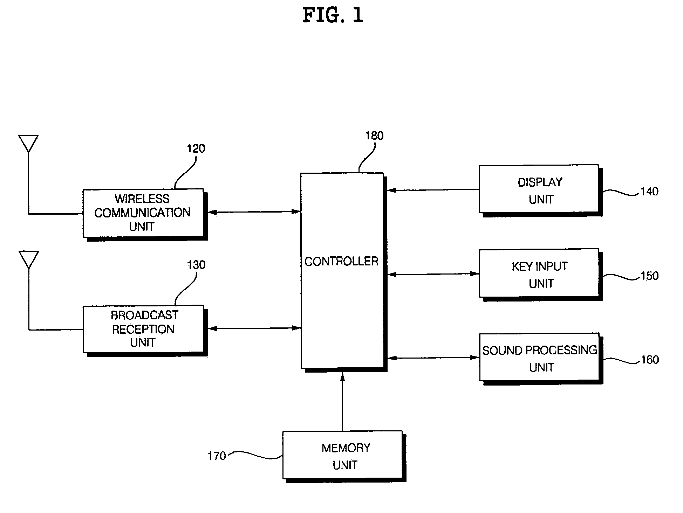

FIG. 1 is a block diagram of a broadcast receiver according to an embodiment of the present invention. Referring to FIG. 1, the broadcast receiver provides a communication function via a mobile communication network. The broadcast receiver includes a wireless communication unit 120, a broadcast reception unit 130, a display unit 140, a key input unit 150, a sound processing unit 160, a memory unit 170, and a control ler 180.

The wireless communication unit 120 provides an interface for wireless communication with a base station through an antenna. Further, the wireless communication unit 120 includes a duplex filter for filtering a signal received through an antenna, a power amplifier for amplifying a transmit signal, a frequency up-convert circuit in a transmission path, a frequency down-convert circuit in a reception path, and etc.

The broadcast reception unit 130 receives a DMB signal from a channel selected by a user, and performs a number of processes such as demodulation on the DMB signal, thereby generating broadcast program data that can be played back. The display unit 140 may be comprised of a liquid crystal display (LCD). The display unit 140 may display a menu for controlling an operation of the broadcast receiver, information regarding a state of a received broadcast signal, information regarding an operating state of the broadcast receiver that varies in response to a command input by the user, and a broadcast program selected by the user. The key input unit 150 may comprise a plurality of keys, including number keys and function keys. The key input unit 150 transmits a signal corresponding to a key hit by the user to the controller 180 and thus receives an operation command and data from the user.

The sound processing unit 160 may amplify a sound signal output by the controller 180 and output the amplified sound signal via, for example, speakers. In addition, the sound processing unit 160 may convert a sound signal input via, for example, a microphone, into an electrical signal and transmit the electrical signal to the controllert 180. The memory unit 170 may be comprised of a read only memory (ROM), a random access memory (RAM), or a flash memory. The memory unit 170 stores programs and data necessary for the operation of the mobile communication device and various other data that the user wishes to store in the memory unit 170. More specifically, the memory unit 170 may store broadcast-related information which is received along with a broadcast program.

The controller 180 controls the operations of the wireless communication unit 120, the broadcast reception unit 130, the display unit 140, the key input unit 150, the sound processing unit 160, and the memory unit 170. More specifically, the controller 180 controls the display unit 140 to display broadcast program data output by the broadcast reception unit 130. If the user selects a broadcast-related information scale-up mode through the key input unit 150, the controller 180 searches the memory unit 170 for broadcast-related information desired by the user and controls the display unit 140 to display the identified broadcast-related information.

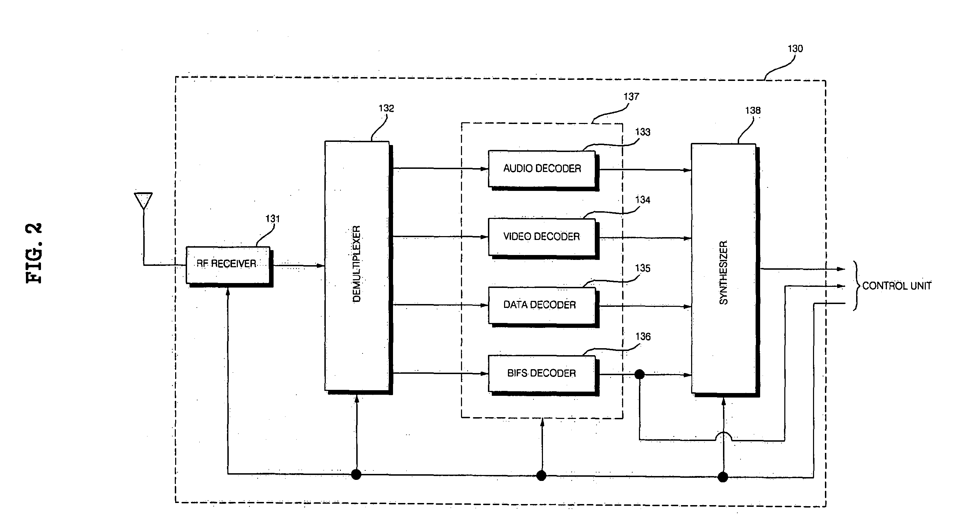

FIG. 2 is a detailed block diagram of the broadcast reception unit 130 illustrated in FIG. 1. Referring to FIG. 2, the broadcast reception unit 130 includes a radio frequency (RF) receiver 131, a demultiplexer 132, a decoder 137, and a synthesizer 138. The decoder 137 includes an audio decoder 133, a video decoder 134, a data decoder 135, and a BIFS decoder 136.

The RF receiver 131 receives a broadcast signal from a broadcast channel selected by a user, and performs demodulation and error correction on the broadcast signal, thereby generating a transport stream (TS). The demultiplexer 132 demultiplexes the TS generated by the RF receiver 131 into a number of element streams, i.e., video, audio, data, and BIFS element streams, and transmits the video, audio, data, and BIFS element streams to the decoder 137. The audio decoder 133, the video decoder 134, the data decoder 135 and the BFIS decoder 136 of the decoder 137 decode the audio, video, data, and BFIS element streams, respectively, transmitted by the demultiplexer 132 and outputs the results of the decoding to the synthesizer 138. The decoded BIFS element stream obtained by the BIFS decoder 136 is transmitted to the controller 180, and then is stored in the memory unit 170 under the control of the controller 180.

The synthesizer 138 may synthesize decoded signals provided by the audio decoder 133 and the video decoder 134, thereby generating broadcast program data that can be played back. The synthesizer 138 may combine information provided by the data decoder 135 or the BIFS decoder 136 with broadcast program data, and output the result of the combination.

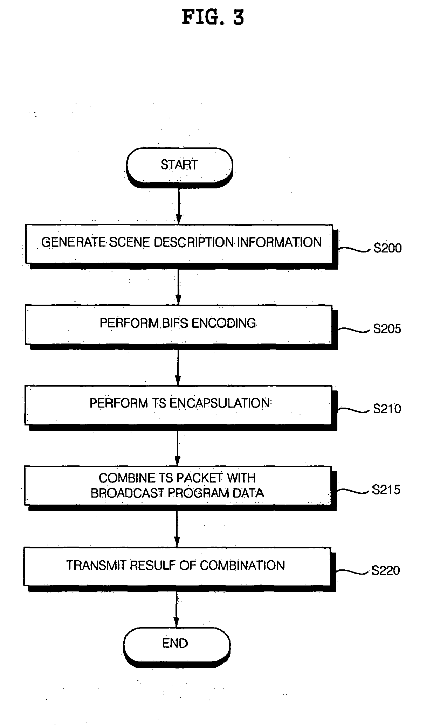

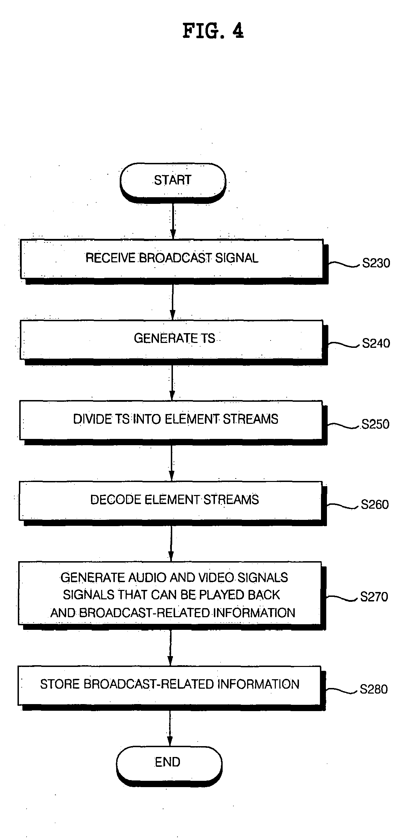

FIGS. 3 and 4 are flowcharts illustrating the transmission/reception of broadcast-related information, according to an embodiment of the present invention. More specifically, FIG. 3 illustrates the situation when a sending party combines broadcast program data and broadcast-related information and transmits the result of the combination using BIFS.

BIFS is a scene description standard necessary for systems that use object-based standards such as MPEG-4. According to an object-based technology, multimedia data is considered as consisting of a number of objects. Thus, there is the need to indicate the temporal and spatial locations of a number of objects that constitute multimedia data. For example, a weather forecast scene may consist of four objects: a weather forecaster, a weather chart which is displayed behind the weather forecaster, weather forecasts read by the weather forecaster, and background music. When a number of objects that constitute a scene are independent from one another, BIFS is necessary to decide when to make each of the objects appear or disappear and where to place each of the objects and thus to describe the scene.

Referring to FIG. 3, in operation S200, scene description information, including additional information or broadcast-related information, is generated as text data. In operation S205, the scene description information is BIFS-encoded so that the scene description information can have a binary format.

In operation S210, the BIFS-encoded scene description information and additional data are encapsulated in a TS packet so that they can be transmitted along with an MPEG-2 TS. In operation S215, the TS packet is inserted into broadcast program data, and the resulting broadcast program data is modulated. In operation S220, the modulated broadcast program data is transmitted to a broadcast receiver. In this manner, it is possible to properly combine broadcast program data and broadcast-related information and transmit the result of the combination to a broadcast receiver.

FIG. 4 is a flowchart illustrating the reception of a broadcast signal with broadcast-related information inserted thereinto by a broadcast receiver, according to an embodiment of the present invention. Referring to FIG. 4, in operation S230, the broadcast reception unit 130 receives a broadcast signal transmitted by a sending party. In operation S240, the RF reception unit 131 generates a TS by performing a number of processes such as demodulation on the broadcast signal. In operation S250, the demultiplexer 132 demultiplexes the TS into a number of element streams.

In operation S260, the decoder 137 decodes the element streams. In operation S270, the audio decoder 133 and the video decoder 134 generate audio and video signals, respectively, that can be played back, and the BIFS decoder 136 generates BIFS information and extracts broadcast-related information from the BIFS information. The broadcast-related information may be displayed during the playback of the audio and video signals. Alternatively, in operation S280, the broadcast-related information is stored in the memory unit 170.

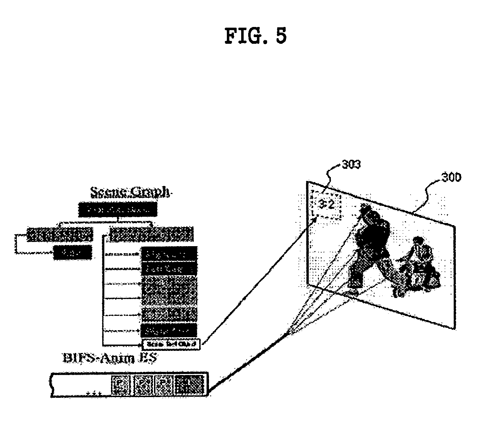

FIG. 5 explains the display of broadcast-related information on a screen by a broadcast receiver, according to an embodiment of the present invention. Referring to FIG. 5, a scene graph of BIFS information defines an animate object which is displayed on a screen 300 and a number of elements necessary for the display of the animate object. The BIFS information is comprised of an object tree including a number of objects, and each of the objects may appear on a video stream or may be linked to a variety of information.

Therefore, broadcast-related information such as score information may be treated as a text object, and may be stored. Then, the broadcast-related information may be displayed, if necessary, on the screen 300 on which a broadcast program is displayed. Referring to FIG. 5, a score text object is displayed in a certain area 303 on the screen 300. Broadcast-related information such as the score text object may not be displayed on the screen 300 until a user requests that broadcast-related information be displayed on the screen 300. Broadcast-related information may be displayed in various manners upon the request of the user. If broadcast-related information is as simple as score information, a field or a tag specified by a data service such as BIFS may be used, instead of using a text object.

In this manner, it is possible to display broadcast-related information (e.g., game scores) along with a broadcast program (e.g., a sports program) while applying to the broadcast-related information different effects from those applied to the broadcast program. In addition, it is possible to decide whether to display broadcast-related information on a screen or hide the broadcast-related information from the screen. Moreover, in a case where information transmitted by a sending party only includes coordinate information, only the coordinate information may be scaled up on a screen.

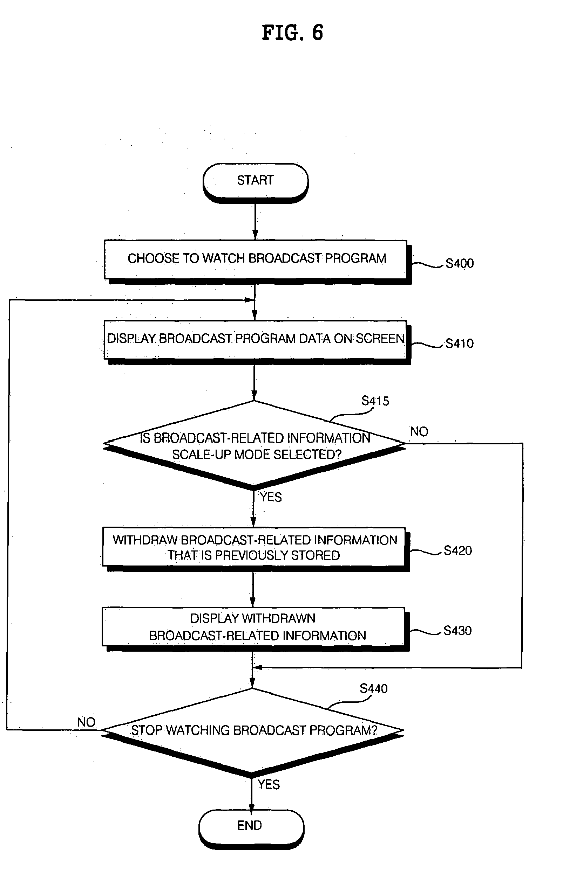

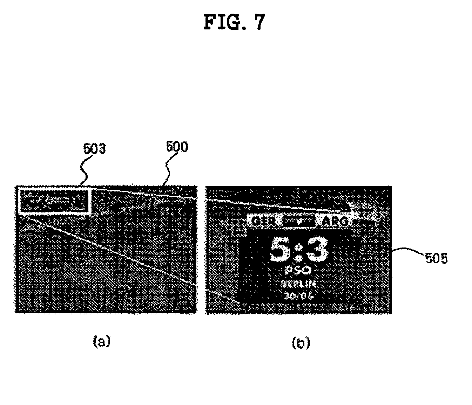

FIG. 6 is a flowchart illustrating a method of controlling a broadcast receiver according to an embodiment of the present invention, and FIG. 7 illustrates screen images displayed by the display unit 140 of FIG. 1 and explains the method illustrated in FIG. 6.

Referring to FIG. 6, in operation S400, a user chooses to watch a broadcast program using a number of keys of the key input unit 150. In operation S410, the control ler 180 receives broadcast program data regarding the broadcast program that the user wishes to watch from the broadcast reception unit 130, and displays the broadcast program data on a screen of the display unit 140.

In operation S420, if the user selects a broadcast-related information scale-up mode in operation S415 while watching the broadcast program on the screen of the display unit 140, the controller 180 withdraws broadcast-related information such as text data regarding a screen currently being displayed by the display unit 140 from the memory unit 170 and displays the withdrawn broadcast-related information on the screen of the display unit 140. In operation S430, the controller 180 scales up the withdrawn broadcast-related information. Then, the controller 180 may display the scaled-up broadcast-related information as a popup window or a semitransparent window.

In this manner, if the size of the screen of the display unit 140 is so small that the user cannot easily recognize broadcast-related information from the screen of the display unit 140, the broadcast-related information may be scaled up on the screen of the display unit 140 to the extent that the broadcast-related information can be easily recognized by the user. In operation S440, it is determined whether the user wishes to stop watching the broadcast program. If it is determined in operation S440 that the user wishes to keep watching the broadcast program, the method returns to operation S410. In this manner, the user may scale up score information on a screen while watching a sports program, and then display the scaled-up score information as a popup window. In addition, the user may scale up purchase information displayed on a screen regarding a current on-air item (e.g., a toll free number and a serial number of the current on-air item) while watching a home shopping program, so that the purchase information can be easily recognized by the user.

FIG. 7 illustrates screen images displayed by the display unit 140. More specifically, FIG. 7(a) illustrates a screen image 500 of a broadcast program displayed by the display unit 140. Referring to FIG. 7(a), score information 503 is displayed in an upper left portion of the screen image 500.

More specifically, when a user selects a broadcast-related information scale-up mode, score information is withdrawn from the memory unit 170, and the withdrawn score information is displayed on a screen, as illustrated in FIG. 7(a). Then, the withdrawn score information may be scaled up on the screen and then displayed as a popup window, as illustrated in FIG. 7(b). Broadcast-related information may be displayed in various manners, other than that involving the use of a popup window. In other words, broadcast-related information may be displayed as a transparent window or may be provided as sound information. Since broadcast-related information can be scaled up on a screen, a user can easily recognize the broadcast-related information that may have not been easily recognized otherwise.

As described above, according to the present invention, it is possible for a user to easily recognize display broadcast-related information even from a small screen of a broadcast receiver by scaling up, on a screen of a broadcast receiver, broadcast-related information (e.g., text information) that is previously displayed only in a certain area on the screen of the broadcast receiver and then displaying the scaled-up broadcast-related information as a popup window or a transparent window.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of controlling a broadcast receiver, the method comprising:
receiving a broadcast signal;
extracting broadcast program data from the broadcast signal and displaying the broadcast program data on a screen;
extracting broadcast-related information from the broadcast signal and storing the broadcast-related information; and
withdrawing the broadcast-related information and then displaying the broadcast-related information on the screen when a broadcast-related information scale-up mode is selected.

2. The method of claim 1, wherein the broadcast-related information is text information.

3. The method of claim 1 or 2, wherein the broadcast-related information is Binary Format for Scene (BIFS)-encoded.

4. The method of any one preceding claim, wherein the display of the broadcast-related information, comprises scaling up the broadcast-related information on the screen and displaying the scaled-up broadcast-related information as one of a popup window and a transparent window.

5. The method of any one preceding claim, further comprising:
generating a transport stream (TS) by combining the broadcast program data and the broadcast-related information, which is encoded; and
generating the broadcast signal by modulating the TS.

6. The method of any one preceding claim, wherein the display of the broadcast-related information, comprises outputting a sound signal corresponding to the broadcast-related information.

7. The method of any one preceding claim, wherein the broadcast signal is a digital multimedia broadcasting (DMB) signal.

8. A method of controlling a broadcast receiver, the method comprising:
generating broadcast-related information which can be selectively displayed by a broadcast receiver;
generating a transport stream (TS) by encoding the broadcast-related information and combining the encoded broadcast-related information with broadcast program data; and
modulating the TS and transmitting the modulated TS to the broadcast receiver.

9. The method of claim 8, wherein the broadcast-related information is text information.

10. The method of claim 8 or 9, wherein the encoding of the broadcast-related information, comprises BIFS-encoding the broadcast-related information.

11. The method of claim any one of claims 8 to 10, further comprising:
receiving a broadcast signal and extracting the broadcast program data from the broadcast signal; and
extracting the broadcast-related information from the broadcast signal and then displaying the broadcast-related information on a screen when a broadcast-related information scale-up mode is selected.

12. The method of claim any one of claims 8 to 11, wherein the broadcast signal is a DMB signal.

13. A system for controlling a broadcast receiver, the system comprising:
a broadcast receiver configured to receive a broadcast signal, extracts broadcast-related information from the broadcast signal, display the broadcast-related information on a screen, and extract broadcast-related information from the broadcast signal and then display the broadcast-related information when a broadcast-related information scale-up mode is selected; and
a broadcast signal transmitter configured to generate a transport stream (TS) by encoding the broadcast-related information and combining the encoded broadcast-related information with the broadcast program data, generate the broadcast signal by modulating the TS, and transmit the TS to the broadcast receiver.

14. The system of claim 13, wherein the broadcast receiver is configured to scale up the broadcast-related information on the screen and display the scaled-up broadcast-related information as one of a popup window and a transparent window.

15. A broadcast receiver, in particular as claimed in any one of claims 13 and 14, comprising:
a broadcast receiver configured to receive a broadcast signal and extract broadcast program data and broadcast-related information from the broadcast signal;
a display unit for displaying the broadcast program data on a screen; and
a controller configured to control the broadcast-related information to be displayed on the screen when a broadcast-related information scale-up mode is selected.

16. The broadcast receiver of claim 15, wherein the broadcast-related information is text information.

17. The broadcast receiver of claim 15 or 16, further comprising a memory unit which stores the broadcast-related information.

18. The broadcast receiver of any one of claims 15 to 17, wherein the broadcast-related information is BIFS-encoded.

19. The broadcast receiver of any one of claims 15 to 18, further comprising a key input unit configured to receive a signal for selecting the broadcast-related information scale-up mode.

20. The broadcast receiver of any one of claims 15 to 19, wherein the controller is configured to control the broadcast-related information to be scaled up on the screen and then to be displayed as one of a popup window and a transparent window.

21. The broadcast receiver of any one of claims 15 to 20, further comprising a sound processing unit configured to output a sound signal corresponding to the broadcast-related information under the control of the controller.

22. The broadcast receiver of any one of claims 15 to 21, further comprising a wireless communication unit configured to provide a mobile communication function under the control of the controller.

23. The broadcast receiver of any one of claims 15 to 22, wherein the broadcast signal is a DMB signal.
